## Europäisches Patentamt

## European Patent Office

## Office européen des brevets

(11) Veröffentlichungsnummer: **0 216 274**
**B1**

(12) **EUROPÄISCHE PATENTSCHRIFT**

(45) Veröffentlichungstag der Patentschrift: **08.08.90**

(51) Int. Cl.⁵: **B 41 J 5/10**

(21) Anmeldenummer: **86112653.0**

(22) Anmeldetag: **12.09.86**

(54) Vorrichtung zur Neigungswinkeleinstellung von Tastaturgehäusen.

(30) Priorität: **27.09.85 DE 8527642 u**
**31.07.86 DE 8620562 u**

(43) Veröffentlichungstag der Anmeldung:
**01.04.87 Patentblatt 87/14**

(45) Bekanntmachung des Hinweises auf die
Patenterteilung:
**08.08.90 Patentblatt 90/32**

(84) Benannte Vertragsstaaten:
**AT BE CH DE FR GB IT LI NL SE**

(73) Patentinhaber: **Siemens Aktiengesellschaft**
**Wittelsbacherplatz 2**
**D-8000 München 2 (DE)**

(72) Erfinder: **Breite, Helge-Detlev**
**Stendrich 4**
**B-4700 Eupen (BE)**

(56) Entgegenhaltungen:
PATENT ABSTRACTS OF JAPAN, Band 8, Nr.
179 (P-295)1616r, 17. August 1984; & JP-A-59 72
538 (RICOH K.K.) 24-04-1984
Idem
PATENT ABSTRACTS OF JAPAN, Band 8, Nr.
170 (M-315)1607r, 7. August 1984; & JP-A-59 65
612 (NIHON HATSUJIYOU K.K.) 13-04-1984
Idem
IBM TECHNICAL DISCLOSURE BULLETIN, Band
26, Nr. 7A, Dezember 1983, Seiten 3277-3278,
New York, US; D. ALLEN: "Dual tilt support legs
for keypad"

Courier Press, Leamington Spa, England.

EP 0 216 274 B1

**Beschreibung**

Die Erfindung betrifft eine Vorrichtung zur Neigungswinkeleinstellung nach dem Oberbegriff des Patentanspruchs 1.

Tastaturen zur Bedienung von Geräten haben auf den Bedienkomfort gerichtete ergonomische Anforderungen zu erfüllen, insbesondere wenn, wie bei Datenverarbeitungsanlagen, Tastaturen über längere Zeiträume zu betätigen sind. Zu den ergonomisch gebotenen Ausgestaltungen von Tastaturen gehört die Verstellbarkeit der Tastaturneigung gegenüber einer waagrecht angeordneten Grundfläche, um der körperlichen Beschaffenheit unterschiedlicher Bedienpersonen und den Abmessungen unterschiedlicher Einsatzorte der Tastaturen zu entsprechen.

Aus "Patent Abstracts of Japan", Band 8, Nr. 179 (JP-A-5 972 538) ist eine Vorrichtung zur Neigungswinkeleinstellung für Tastaturen bekannt, die aus je einem an den Innenseiten der linken und rechten Querseite des Tastaturgehäuses in der Nähe der Gehäuserückwand angeordneten drehbar gelagerten Fuß mit einem den Drehpunkt aufweisenden Oberteil und einem speichenförmigen, auf einer Grundfläche positionierbaren Unterteil besteht. Das Oberteil weist jeweils an der der benachbarten Gehäusequerseite zugewandten und abgewandten Seite je einen in der Drehachse angeordneten Lagerzapfen auf, die jeweils in einer Lageröffnung eines mit der Gehäusequerseite bzw. mit dem Gehäusedeckel fest verbundenen ersten bzw. zweiten Lagerelements drehbar gelagert sind.

Nachteilig bei der bekannten Vorrichtung ist, daß die Füße ohne Möglichkeit von Zwischenstellungen nur in einer Ruheposition und einer einzigen Arbeitsposition einstellbar sind, wobei in beiden Positionen eine Einrastung fehlt. Für den Halt der Füße sorgt eine Spiralfeder, so daß sich ein relativ komplizierter Aufbau ergibt.

In dem "Patent Abstract of Japan", Band 8, Nr. 170 (JP-A-5 965 612) sind zwar Mittel zum Einstellen eines Gehäuseneigungswinkels zu sehen, die rastbare Verriegelungselemente aufweisen, doch werden auch hier wieder Spiralfedern als Einzelelemente benötigt. Die Vorrichtung setzt sich somit aus mehr als zwei Einzelelementen zusammen.

Aus "IBM Technical Disclosure Bulletin", Band 26, Nr. 7 A, Dezember 1983, Seiten 3277 und 3278 ist eine einrastende Fußverstellung bekannt, die keine zusätzliche Spiralfeder benötigt. Zur Einstellung unterschiedlicher Neigungswinkel werden zwei unterschiedlich lange Fußelemente eingesetzt, die ineinandergreifend angeordnet und dabei so gestaltet sind, daß eine individuelle Bedienung der einzelnen Fußelemente möglich ist. Aus diesem Grund sind die einzelnen Fußelemente sowie das für die Einrastfunktion zuständige Teil aufwendig gestaltet, so daß auch hier keine einfache Lösung des Problems vorliegt.

Aufgabe der Erfindung ist es, eine Vorrichtung zur Neigungswinkeleinstellung von Tastaturen bei Geräten anzugeben, die möglichst wenige und einfache Elemente aufweist, trotzdem aber die Neigungswinkeleinstellung in einfacher Weise zuläßt.

Diese Aufgabe wird in einer Vorrichtung der eingangs genannten Art gemäß dem kennzeichnenden Teil des Patentanspruchs 1 gelöst.

Vorteilhafte Ausbildungen der Erfindung sind in den Unteransprüchen gekennzeichnet.

Die Tastatur ist in einfacher Weise gegenüber einer Grundfläche im Winkel verstellbar. Die entsprechende Vorrichtung besteht aus wenigen Teilen, die einfach herstellbar und montierbar sind. Die Vorrichtung verleiht der Tastatur in jedem einstellbaren Neigungswinkel sicheren Halt.

Die rippenförmigen Verriegelungselemente rasten leicht in die Aufnahmeelemente ein, die schlitz- oder nutförmig ausgebildet sein können. Ebenso leicht lassen sich die Verriegelungselemente aus den Aufnahmeelementen lösen.

Zwei Ausführungsbeispiele der Erfindung werden im folgenden anhand der Zeichnung näher beschrieben. Es zeigen für das erste Ausführungsbeispiel:

FIG 1 eine Seitenansicht des Tastaturgehäuses mit Fuß,

FIG 2 eine Seitenansicht des Fußes,

FIG 3 eine Seitenansicht eines Lagerelements,

FIG 4 eine Seitenansicht des Gehäuses und Fußes im montierten Zustand.

Für das zweite Ausführungsbeispiel:

FIG 5 eine Seitenansicht des Tastaturgehäuses mit Fuß,

FIG 6 eine Seitenansicht des Fußes,

FIG 7 eine Seitenansicht eines Lagerelements,

FIG 8 eine Seitenansicht des Gehäuses und Fußes im montierten Zustand.

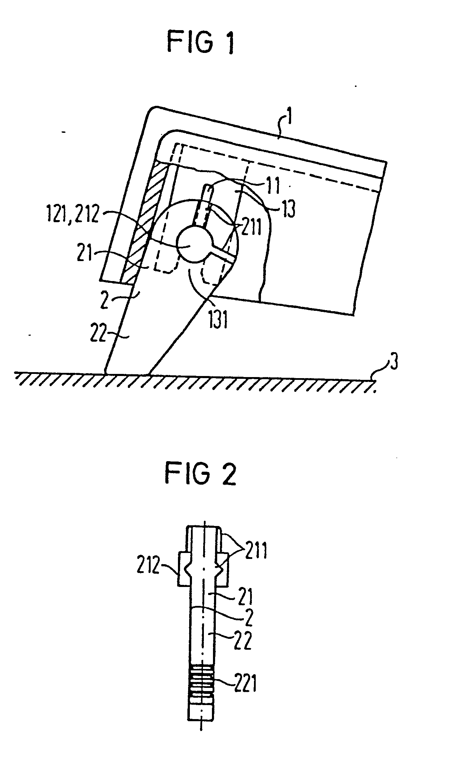

Ein Tastaturgehäuse 1 ruht, wie in FIG 1 dargestellt, mit einem in seinem Gehäuseinneren angeordneten, drehbar gelagerten Fuß 2 auf einer als Auflagefläche für das Tastaturgehäuse dienenden Grundfläche 3. An der Querseite eines beispielsweise rechteckigen Gehäuses ist in der Nähe der Gehäuserückwand ein im Gehäuse 1 federnd gelagertes Lagerelement 13 angeordnet. Das Lagerelement 13 ist als federnde Zunge mit einem von der dem Gehäusedeckel abgewandten Seite zu einer Lageröffnung 121 verlaufenden Spalt 131 ausgebildet, dessen Breite kleiner als der Durchmesser der Lageröffnung 121 ist. Die zylinderförmige Lageröffnung 121 dient der Aufnahme eines Lagerzapfens 212, der, wie anhand von FIG 2 beschrieben wird, am Fuß 2 in der Drehachse angeordnet ist.

Der Fuß 2 besteht aus einem scheibenförmigen Oberteil 21 mit kreisrunden Seitenflächen und einem sich an das Fußoberteil 21 anschließenden speichenförmigen, auf der Grundfläche 3 (FIG I) positionierbaren Unterteil 22. Durch die Mittelpunkte der Seitenflächen verläuft die Drehachse des Fußes 2. Die Seitenflächen weisen radial zur Drehachse bzw. zum Lagerzapfen 212 angeordnete rippenförmige Verriegelungselemente 211 auf. Das Aufnahmeelement 11 des Lagerelements 13 dient der Aufnahme der ihm zugewandten Verriegelungselemente 211. Im Ausführungsbeispiel sind zwei um etwa 96° versetzte Verriegelungselemente 211 vorgesehen. Weitere entsprechend angeordnete Verriegelungselemente 211 ermöglichen die Einstellung weiterer Neigungswinkel des Tastaturgehäuses 1 gegenüber der Grundfläche 3.

Der in FIG 1 dargestellte Fuß 2 liegt mit einer gerade verlaufenden Auflagelinie auf der Grundfläche 3 auf. Stattdessen kann die Auflagelinie gekrümmt, beispielsweise kreisförmig, ausgebildet sein.

Der in FIG 2 gezeigte Fuß 2 weist auf beiden Seiten der eingezeichneten Mittelachse je einen in der Drehachse angeordneten Lagerzapfen 212 auf, der im montierten Zustand in den Lageröffnungen 121 des Lagerelements 13 und des noch zu beschreibenden Lagerelements 12 ruht. Die im Fußoberteil 21 angeordneten rippenförmigen Verriegelungselemente 211 weisen vorzugsweise einen parabelähnlichen Querschnitt auf. Dieser Querschnitt sichert einerseits einen festen Halt des Fußes 2 in den im Gehäuse 1 angeordneten Aufnahmeelementen il, insbesondere wenn diese schlitz- oder nutförmig ausgebildet sind, und ermöglicht andererseits das leichte Ver- und Entriegeln des Fußes 2 im Gehäuse 1. Die in FIG 2 dargestellten Verriegelungselemente 211 sind auf jeder Seite des Fußoberteils 21 entsprechend FIG 1 um ca. 96° versetzt. Sie sind radial zum Drehpunkt angeordnet und liegen einander auf beiden Seiten des Fußoberteils 21 gegenüber, die im montierten Zustand der der jeweils benachbarten Gehäusequerseite zugewandten und abgewandten Seite entsprechen.

Der Fuß 2 kann an seinem Unterteil 22 Griffrillen 221 aufweisen.

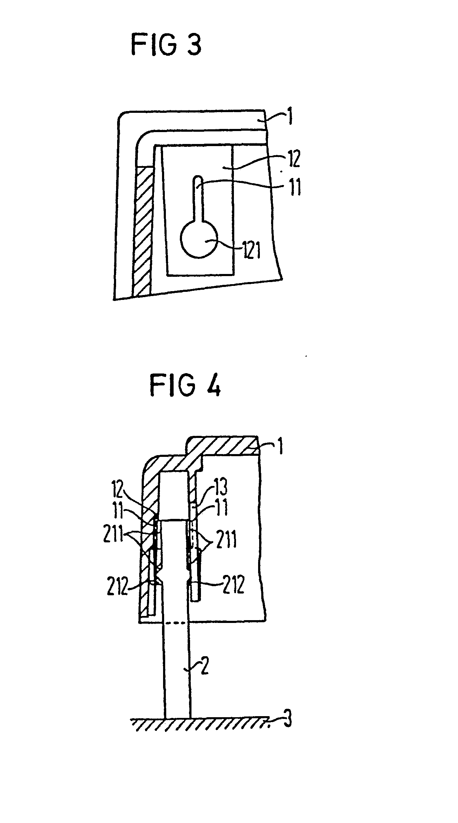

Im Tastaturgehäuse 1 sind an jeder Gehäusequerseite zwei Lagerelemente 12 und 13 angeordnet. Das jeweils erste Lagerelement 12 ist fest mit der jeweiligen benachbarten Gehäusequerseite verbunden. Wie das in FIG 1 dargestellte zweite Lagerelement 13 weist das in FIG 3 dargestellte Lagerelement 12 eine Lageröffnung 121 sowie ein Aufnahmeelement 11, jedoch keinen Spalt 131 auf. Die Aufnahmeelemente 11 des ersten und zweiten Lagerelements 12 und 13 (FIG I) sind unmittelbar oberhalb der Lageröffnungen 121 ausgehend vom Drehpunkt des Fußes 2 angeordnet, so daß sich das Tastaturgehäuse 1 im verriegelten Zustand auf die Verriegelungselemente des Fußes 2 abstützt.

FIG 4 veranschaulicht das Zusammenwirken von Gehäuse 1 und dem auf der Grundfläche 3 positionierbaren Fuß 2. Der Fuß 2 ist mit seinen Lagerzapfen 212 drehbar in den Lageröffnungen des ersten und zweiten Lagerelements 12 und 13 gelagert. Die in FIG 4 vertikal gezeigten rippenförmigen Verriegelungslemente 211 ruhen in den Aufnahmeelementen, während die anderen in einem bestimmten Winkel, z.B. 96°, versetzten rippenförmigen Verriegelungselemente 211 an den Innenseiten des ersten und zweiten Lagerelements 12 und 13 anliegen. Die keilförmige Ausbildung des in Richtung der dem Gehäusedeckel abgewandten Seite sich verjüngenden ersten Lagerelements 12 verhindert, daß es durch das nicht in das Aufnahmeelement 11 eingerastete Verriegelungselement 211 in Richtung der Gehäusequerseite gedrückt wird. Das nicht in das Aufnahmeelement 11 eingerastete rippenförmige Verriegelungselement 211 beeinträchtigt die funktionsgerechte Lagerung des Lagerzapfens 212 in der entsprechenden Lageröffnung des Lagerelements 12 nicht. Auch das dem Lagerelement 13 zugewandte nicht eingerastete rippenförmige Verriegelungselement 211 beeinträchtigt nicht die funktionsgerechte Lagerung des Lagerzapfens 212 in der entsprechenden Lageröffnung. Das zweite Lagerelement 13, das mit dem Gehäusedeckel verbunden und insbesondere als federnde Zunge ausgebildet ist, wird vielmehr durch das entsprechende nicht eingerastete Verriegelungselement 211 schräg gegen den Oberteil des Fußes 2 gedrückt. Die Verbindung zwischen eingerastetem Verriegelungselement 211 und Aufnahmeelement 11 wird hierdurch unterstützt.

Die in den FIG 2 und 4 dargestellten Lagerzapfen 212 sind zylinderförmig ausgebildet. Der im zweiten Lagerelement 13 zu lagernde Lagerzapfen 212 kann an siner der dem Gehäuseinneren zugewandten Seite ein Sicherungselement beispielsweise in Form einer Scheibe aufweisen, das unerwünschte horizontale Verschiebungen des Fußes 2 zur Gehäusequerseite verhindert, ohne das Ver- und Entriegeln des Fußes 2 mit dem Tastaturgehäuse 1 zu beeinträchtigen.

In einem zweiten Ausführungsbeispiel ist die Tastatur so ausgestaltet, daß die Füße bei möglichst einfacher Lagerung eine hohe Stabilität, insbesondere hinsichtlich horizontalen, zu den Gehäusequerseiten gerichteten Bewegungen aufweisen.

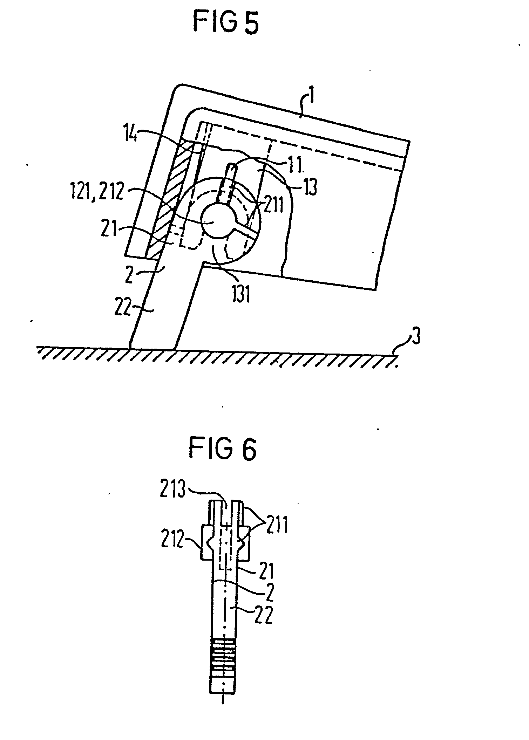

Das in der FIG 5 dargestellte Tastaturgehäuse 1 mit einem in seinem Gehäuseinnern angeordneten, drehbar gelagerten Fuß 2 entspricht weitestgehend dem in der FIG 1 dargestellten.

Der in FIG 6 gezeigte Fuß 2 weist auf beiden Seiten des Oberteils 21 je einen in der Drehachse angeordneten Lagerzapfen 212 auf, die im montierten Zustand in den Lageröffnungen 121 des Lagerelements 13 und des noch zu beschreibenden Lagerelements 12 ruhen.

In die Randfläche des scheibenförmigen Fußoberteils 21 ist mittig eine Nut 213 eingelassen, die mit ihrer, etwa dem halben Umfang des Fußoberteils 21 entsprechenden Länge senkrecht zur Drehachse des Fußes 2 verläuft. Die Nut 213 hat zur Drehachse des Fußes 2 senkrecht stehende Seitenwände. Im montierten Zustand des Fußes 2 ragt, wie in FIG 5 angedeutet, ein am Gehäuse befestigtes Führungselement 14 in die Nut 213 hinein.

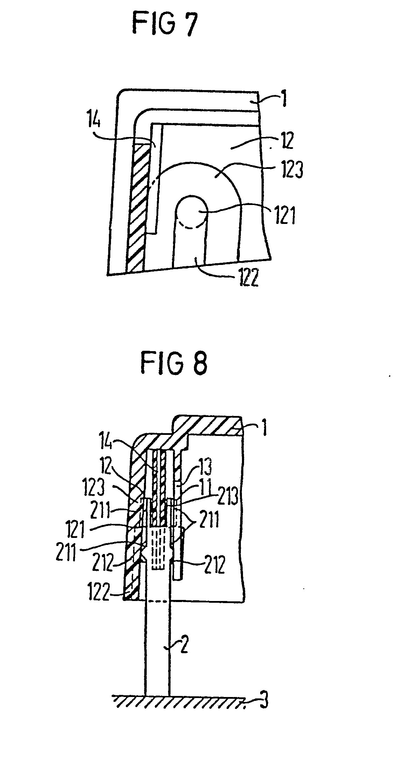

Im Tastaturgehäuse 1 sind an jeder Gehäusequerseite zwei Lagerelemente 12 und 13 angeordnet. Das in FIG 7 gezeigte jeweilige erste Lagerelement 12 ist fest mit der jeweiligen benachbarten Gehäusequerseite verbunden und ist als flächige Ausnehmung an der Innenseite der Gehäusequerseite ausgebildet. Die flächige Ausnehmung hat einen U-förmigen Begrenzungsrand und beinhaltet eine Einführöffnung 122 für den jeweiligen Lagerzapfen 212 des zu montierenden Fußes 2. Die Einführöffnung 122 verläuft mit einer dem Durchmesser der Lageröffnung 121 entsprechenden Breite von der dem Gehäusedeckel abgewandten Seite zur eigentlichen kreisförmigen Lageröffnung 121. Bei der Montage des Fußes 2 gleitet der betreffende Lagerzapfen 212, von den Begrenzungsrändern geführt, in die Lageröffnung 121 und findet dort im halbkreisförmigen Teil des Begrenzungsrandes seine Lagerung.

Eine die flächige Ausnehmung umfassende weitere Ausnehmung 123 mit geringerer Ausnehmungstiefe dient dazu, die zur benachbarten Gehäusequerseite weisenden rippenförmigen Verriegelungselemente 211 des Fußes 2 von der Innenseite der Gehäusequerseite und damit vom ersten Lagerelement 12 zu beabstanden.

FIG 8 veranschaulicht das Zusammenwirken von Gehäuse 1 und dem auf der Grundfläche 3 positionierbaren Fuß 2. Der Fuß 2 ist mit seinen Lagerzapfen 212 drehbar in den Lageröffnungen 121 des ersten und zweiten Lagerelements 12 und 13 gelagert. Eines der in FIG 8 vertikal gezeigten rippenförmigen Verriegelungslemente 211 ruht in dem Aufnahmeelement 11 des Lagerelements 13, das andere, auf derselben Seite befindliche rippenförmige Verriegelungselement 211 ist nicht in das Aufnahmeelement 11 eingerastet und liegt an der Innenseite des zweiten Lagerelements 13 an. Es beeinträchtigt nicht die funktionsgerechte Lagerung des Lagerzapfens 212 in der Lageröffnung 121 des zweiten Lagerelements 13. Die zur Gehäusequerseite weisenden rippenförmigen Verriegelungselemente 211 sind von dem ersten Lagerelement 12 beabstandet und für die Funktion unwichtig.

Der Grund für an beiden Seiten des Fußoberteils angeordnete rippenförmige Verriegelungselemente 211 liegt nämlich darin, den Gehäusequerseiten keine unterschiedlich ausgebildeten linken und rechten Füße 2 zuordnen zu müssen.

Das in FIG 5 und 7 angedeutete Führungselement 14 ist in FIG 8 deutlich zu erkennen. Das Führungselement 14 besteht aus zwei voneinander beabstandeten parallelen Führungsstegen, die jeweils mit ihrer der Nut 213 gegenüberliegenden Seite senkrecht zur Drehachse des Fußes 2 an der Gehäuserückwand befestigt sind. Die Führungsstege ragen in die Nut 213 des montierten Fußes 2 hinein und liegen jeweils an einer Seitenwand der Nut an. Da das Fußoberteil 21 kreisförmig ausgebildet ist, ragen bei jeder drehbaren Position des Fußes 2 die Führungsstege immer gleich tief in die Nut 213 hinein und vermitteln in jeder Position dem Fuß 2 eine hohe Stabilität.

Vorteilhafterweise laufen die den Seitenwänden der Nut 213 zugewandten Seiten eines jeweiligen Führungsstegs keilförmig zur Auflagefläche bzw. Grundfläche 3 hin zusammen. Eine derartige Ausbildung der Führungsstege ist bei der Montage des Fußes 2 von Vorteil, da dadurch das Einführen der Führungsstege in die Nut 213 erleichtert wird.

Patentansprüche

1. Vorrichtung zur Neigungswinkeleinstellung von Tastaturgehäusen, bestehend aus je einem an den Innenseiten der linken und rechten Querseite des Tastaturgehäuses (1) in der Nähe der Gehäuserückwand angeordneten drehbar gelagerten Fuß (2) mit einem den Drehpunkt aufweisenden Oberteil (21) und einem speichenförmigen, auf einer Grundfläche (3) positionierbaren Unterteil (22), wobei das Oberteil jeweils an der der benachbarten Gehäusequerseite zugewandten und abgewandten Seite je einen in der Drehachse angeordneten Lagerzapfen (212) aufweist, der jeweils in einer weigstens einen Teilkreis das stellenden Lageronung (121) eines mit der Gehäusequerseite bzw. mit dem Gehäusedeckel fest verbundenen ersten bzw. zweiten Lagerelements (12, 13) drehbar gelagert ist, dadurch gekennzeichnet, daß das zweite Lagerelement (13) als federnde Zunge ausgebildet ist und daß das Fußoberteil (21) wenigstens auf einer Seite radial zum Drehpunkt angeordnete rippenförmige Verriegelungselemente (211) aufweist, die in wenigstens ein im Tastaturgehäuse (1) angeordnetes Aufnahmeelement (11) einrastbar sind.

2. Vorrichtung nach Anspruch 1, dadurch gekennzeichnet, daß wenigstens ein Aufnahmeelement (11) in einem der Lagerelemente (12, 13) angeordnet ist.

3. Vorrichtung nach Anspruch 1 oder 2, dadurch gekennzeichnet, daß das zweite Lagerelement (13) mit einem von der dem Gehäusedeckel abgewandten Seite zur Lageröffnung (121) verlaufenden Spalt (131) ausgebildet ist, dessen Breite kleiner als der Durchmesser der Lageröffnung (121) ist.

4. Vorrichtung nach einem der vorhergehenden Ansprüche, dadurch gekennzeichnet, daß das Oberteil (21) des Fußes (2) wenigstens eine senkrecht zur Drehachse verlaufende Nut (213) aufweist, in die ein im Gehäuse (1) angeordnetes und an den beiden Seitenwänden der Nut (213) anliegendes Führungselement (14) zumindest teilweise hineinragt.

5. Vorrichtung nach Anspruch 4, dadurch gekennzeichnet, daß das Führungselement (14) aus zwei voneinander beabstandeten Einzelführungselementen besteht, die jeweils an einer Seitenwand der Nut (213) anliegen.

6. Vorrichtung nach Anspruch 5, dadurch gekennzeichnet, daß die Einzelführungselemente als zueinander parallele Führungsstege ausgebildet sind, die jeweils mit ihrer der Nut (213) gegenüberliegenden Seite an der Gehäuserückwand befestigt sind.

7. Vorrichtung nach einem der vorhergehenden Ansprüche, dadurch gekennzeichnet, daß die Lageröffnung (121) des jeweils ersten Lagerelements (12) durch eine an der Innenseite der jeweiligen Gehäusequerseite befindliche flächige Ausnehmung, insbesondere kreisförmige Ausnehmung, gebildet ist.

8. Vorrichtung nach Anspruch 7, dadurch gekennzeichnet, daß die Lageröffnung (121) zusammen mit einer Einführöffnung (122) für den Lagerzapfen eines Fußes als flächige Ausnehmung mit U-förmigem Begrenzungsrand ausgebildet ist und daß die Einführöffnung (122) von der dem Gehäusedeckel abgewandten Seite zur Lageröffnung (121) hin verläuft.

## Revendications

1. Dispositif pour régler l'angle d'inclinaison de boîtiers de claviers, constitué par respectivement un pied (2) monté de façon à pouvoir pivoter sur les faces intérieures des côtés transversaux de gauche et de droite du boîtier de clavier (1), à proximité de la paroi arrière du boîtier, et comportant une partie supérieure (21) possédant un centre de rotation, et une partie inférieure (22) en forme de rayon, pouvant être positionnée sur une surface de base (3), la partie supérieure possédant, sur ses côtés respectifs tournés en direction et à l'opposé du côté transversal voisin du boîtier, respectivement un tourillon (212), qui est situé sur l'axe de rotation et est monté rotatif respectivement dans une ouverture de support (121), qui représente une partie de cercle, d'un premier ou d'un second élément de palier (12, 13) relié rigidement au côté transversal ou au couvercle du boîtier, caractérisé par le fait que le second élément de palier (13) est agencé sous la forme d'une languette élastique et que la partie supérieure (21) du pied possède des éléments de verrouillage en forme nervures (211), qui sont disposés radialement par rapport au centre de rotation au moins sur un côté et qui peuvent s'encliqueter dans au moins un logement (11) disposé dans le boîtier (1) du clavier.

2. Dispositif suivant la revendication 1, caractérisé par le fait qu'au moins un logement (11) est ménagé dans l'un des éléments de palier (12, 13).

3. Dispositif suivant la revendication 1 ou 2, caractérisé par le fait que le second élément de palier (13) est agencé avec une fente (131), qui s'étend depuis le côté tourné à l'opposé du couvercle du boîtier en direction de l'ouverture (121) du palier et dont la largeur est inférieure au diamètre de cette ouverture (121).

4. Dispositif suivant l'une des revendications précédentes, caractérisé par le fait que la partie supérieure (21) du boîtier (2) possède au moins une rainure (213) qui s'étend perpendiculairement à l'axe de rotation et dans laquelle s'engage au moins partiellement un élément de guidage (14) disposé dans le boîtier (1) et s'appliquant contre les deux parois latérales de la rainure (213).

5. Dispositif suivant la revendication 4, caractérisé par le fait que l'élément de guidage (14) est constitué par deux éléments individuels de guidage distants l'un de l'autre, qui s'appliquent respectivement contre une paroi latérale de la rainure (213).

6. Dispositif suivant la revendication 5, caractérisé par le fait que les éléments individuels de guidage sont réalisés sous la forme de barrettes de guidage parallèles entre elles, qui sont fixées respectivement, par leurs côtés situés à l'opposé de la rainure (213), sur la paroi arrière du boîtier.

7. Dispositif suivant l'une des revendications précédentes, caractérisé par le fait que l'ouverture (121) du premier élément de palier respectif (12) est formée par un évidement d'une certaine étendue, situé dans la face intérieure du côté transversal respectif du boîtier, notamment un évidement circulaire.

8. Dispositif suivant la revendication 7, caractérisé par le fait que l'ouverture de palier (121) est réalisée, conjointement avec une ouverture d'entrée (122) pour le tourillon d'un pied, sous la forme d'un évidement d'une certaine étendue possédant un bord limite en forme de U, et que l'ouverture d'introduction (122) s'étend depuis le côté tourné à l'opposé du couvercle du boîtier en direction de l'ouverture de palier (121).

## Claims

1. Device for adjusting the angle of inclination of keyboard casings, consisting of in each case one foot (2) rotatably mounted on the inner sides of the left and right transverse side of the keyboard casing (1) and arranged near the housing rearwall, having an upper part (21) which has the pivot and having a spoke-shaped lower part (22) which can be positioned on a base surface (3), the upper part having in each case on the side facing and the side facing away from the adjacent casing transverse side one journal (212) each arranged in the axis of rotation, said journal being rotatably mounted in each case in a bearing opening (121), representing at least one graduated circle, of a first or second bearing element (12, 13) permanently connected to the casing transverse side or to the casing lid, characterized in that the second bearing element (13) is constructed as a spring-mounted tongue and in that the foot upper part (21) has at least on one side rib-shaped locking elements (211) arranged radially to the pivot, said locking elements being lockable in at least one receiving element (11) arranged in the keyboard casing (1).

2. Device according to Claim 1, characterized in that at least one receiving element (11) is arranged in one of the bearing elements (12, 13).

3. Device according to Claim 1 or 2, characterized in that the second bearing element (13) is constructed with one gap (131) running from the side facing away from the casing lid to the bearing opening (121), the width of which gap is smaller than the diameter of the bearing opening (121).

4. Device according to one of the preceding claims, characterized in that the upper part (21) of the foot (2) has at least one groove (213) running perpendicularly to the axis of rotation, into which groove a guiding element (14) arranged in the casing (1) and resting on the two side walls of the groove (213) at least partially projects.

5. Device according to Claim 4, characterized in that the guiding element (14) consists of two single guiding elements spaced apart from one another, said single guiding elements resting in each case on one side wall of the groove (213).

6. Device according to Claim 5, characterized in that the single guiding elements are constructed as parallel guide webs which are secured in each case on the casing rear wall by their side lying opposite the groove (213).

7. Device according to one of the preceding claims, characterized in that the bearing opening (121) of the in each case first bearing element (12) is formed by a flat recess, in particular circular recess, located on the inside of the respective casing transverse side.

8. Device according to Claim 7, characterized in that the bearing opening (121) is constructed together with one insertion opening (122) for the journal of a foot as a flat recess with U-shaped limiting edge and in that the insertion opening (122) runs from the side facing away from the casing lid to the bearing opening (121).

## FIG 1

121,212

21

2

22

11

13

211

131

1

3

## FIG 2

212

211

21

2

22

221

1

## FIG 3

## FIG 4

## FIG 5

## FIG 6

## FIG 7

## FIG 8